# EUROPEAN PATENT APPLICATION

(11) **EP 1 749 707 A2**
(43) Date of publication of application: **07.02.2007**
(21) Application number: 06013827.8
(22) Date of filing: 04.07.2006
(51) Int. Cl.: B60R 21/215

(54) **Airbag-device cover and airbag device**

(30) Priority: 03.08.2005 JP 2005225626
(71) Applicant: TAKATA CORPORATION, Minato-ku, Tokyo 106-8510 (JP)
(72) Inventor: Hayashi, Shinji, Minato-ku Tokyo 106-8510 (JP)
(74) Representative: Vossius & Partner

(57) **Abstract**

An airbag-device cover is provided which has a door portion that is torn from an interior panel along a tear line in response to inflation of an airbag so as to be deployed outward towards the inside of a vehicle cabin, and which also has a reinforcement frame and a backing member respectively attached to a peripheral area and a back face of the door portion by vibration welding, such that the frame and the backing member extend to areas of the interior panel that are adjacent to the tear line, and moreover, to provide an airbag device equipped with such an airbag-device cover. An instrument panel body 7 is provided with a door portion 13 which is surrounded by a tear line 11. A flange portion 21 of a frame 15 and a flap 25 are respectively attached to an area of the instrument panel body 7 that surrounds the door portion 13 and to a back face of the door portion 13 via welding ribs 31 by vibration welding. Of the welding ribs 31, trunk ribs 31A, 31B that are disposed closest to the tear line 11 respectively have branch ribs 32a, 32b protruding therefrom towards the tear line 11. The branch ribs 32a, 32b are narrower in width than the trunk ribs 31A, 31B (Fig. 3).

## Description

The present invention relates to an airbag-device cover which has a door portion that is torn from an interior panel along a tear line in response to inflation of an airbag so as to be deployed outward towards the inside of a vehicle cabin. In particular, the present invention relates to an airbag-device cover which has a reinforcement frame and a backing member respectively welded to a peripheral area and a back face of a door portion by vibration welding. The present invention also relates to an airbag device equipped with such an airbag-device cover.

JP-A-2005-153545 (Patent Document 1) discusses an example of an airbag-device cover which has a door portion that is torn from an interior panel along a tear line in response to inflation of an airbag so as to be deployed outward towards the inside of a vehicle cabin, and which also has a reinforcement frame and a backing member respectively welded to a peripheral area and a back face of the door portion by vibration welding.

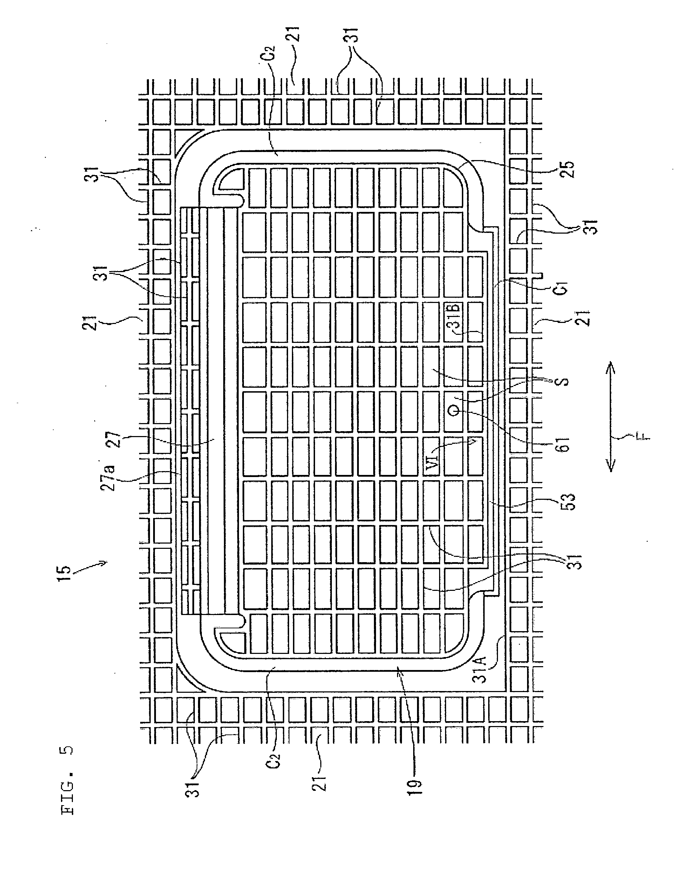

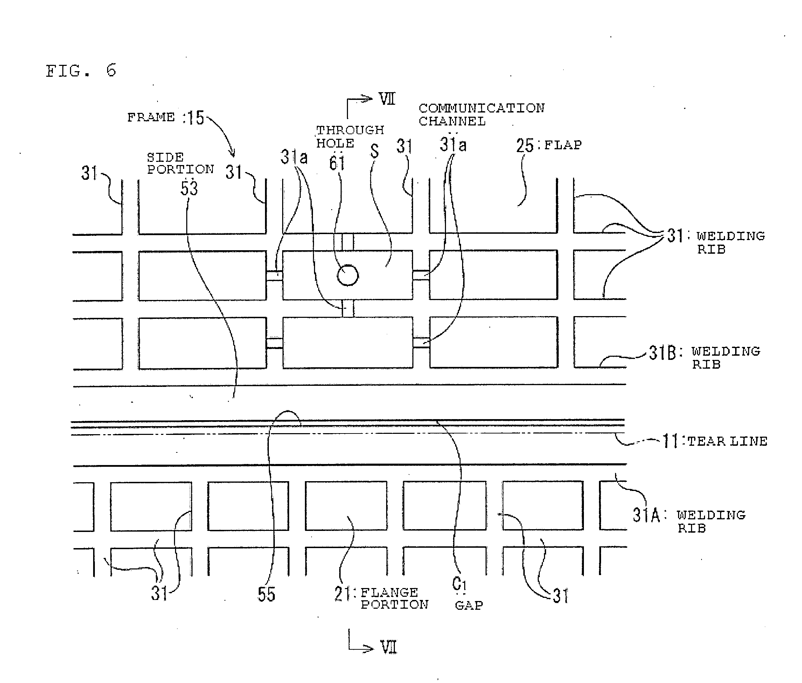

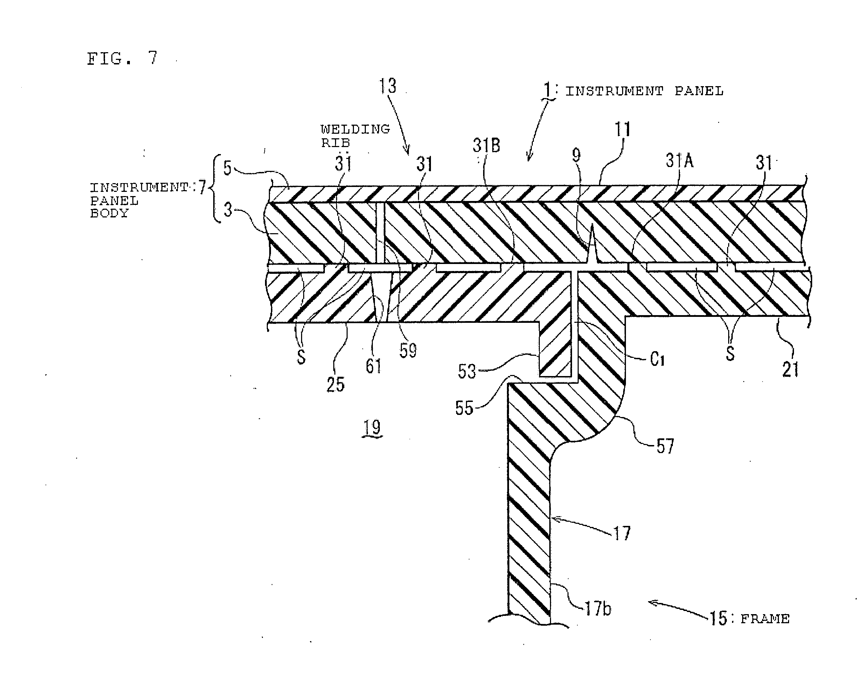

Fig. 5 is a top view of a frame and a backing member (which is called a resin flap section for reinforcement in JP-A-2005-153545) included in an airbag-device cover (which is called a top-coated vehicle-interior panel in JP-A-2005-153545). Fig. 6 is an enlarged view of section VI in Fig. 5. Fig. 7 is a cross-sectional view taken along line VII-VII in Fig. 6.

An instrument panel 1 serving as a top-coated vehicle-interior panel (airbag-device cover) according to JP-A-2005-153545 is provided with an instrument panel body 7 having a two-layer structure, which includes a resin base plate 3 composed of, for example, polypropylene (PP) and a resin top layer 5 tightly attached to a front face of the base plate 3 by, for example, vacuuming and adhered thereto with an adhesive (not shown). Reference numeral 59 indicates an air-release through hole which extends between the front face and a back face of the base plate 3.

The back face of the base plate 3 of the instrument panel body 7 is provided with a groove 9 extending along an upper rim of a retainer of an airbag device and being substantially rectangular in plan view. A linear thin-walled portion extending along the groove 9 is a tear line 11 that serves as a guide along which the instrument panel body 7 is torn when an airbag is inflated. (The tear line 11 is called a fracture portion in JP-A-2005-153545.) An inner region surrounded by the tear line 11 defines a door portion 13. When the airbag is inflated, the instrument panel body 7 is torn along the tear line 11 so that the door portion 13 becomes separated from the instrument panel body 7. Thus, the door portion 13 is deployed outward towards the inside of the vehicle cabin.

An area of the back face of the instrument panel body 7 that surrounds the door portion 13 has a resin frame 15 attached thereto by vibration welding. The frame 15 includes a substantially-rectangular-tube-shaped frame portion 17 that extends along an outer periphery of the tear line 11, and a flange portion 21 that extends outward laterally along the back face of the instrument panel body 7 from an upper rim of the frame portion 17. The flange portion 21 and the frame portion 17 are integrated with each other.

The frame portion 17 includes a front frame wall (not shown) extending in a width direction of a vehicle, a rear frame wall 17b disposed behind and facing the front frame wall and extending in the width direction of the vehicle, a left frame wall (not shown) connecting the left edges of the front frame wall and the rear frame wall 17b and extending in a front-rear direction of the vehicle, and a right frame wall (not shown) connecting the right edges of the front frame wall and the rear frame wall 17b and extending in the front-rear direction of the vehicle. An upper opening of the frame portion 17 is a substantially rectangular shooting opening 19 through which the airbag inflates. The flange portion 21 extends entirely around the periphery of the frame portion 17.

A resin flap 25 serving as a backing member for reinforcing the door portion 13 is disposed inside the shooting opening 19. When the airbag is inflated, the flap 25 is deployed together with the door portion 13. The flap 25 is composed of a highly tenacious resin material that is resistant to breakage under low temperature. On the other hand, the frame 15 (including the frame portion 17 and the flange portion 21) is for reinforcing the peripheral area of the door portion 13 and is composed of a resin material containing glass fibers having relatively high rigidity. A base side portion of the flap 25 is integrally provided with a hinge 27. A base 27a of the hinge 27 is joined to a connection area between the front frame wall of the frame portion 17 and the flange portion 21.

A side portion 53 of the flap 25 opposite to the side portion with the hinge 27 is disposed on a ledge 55 provided at an inner side (i.e. a side closer to the shooting opening 19) of a connection area 57 between the rear frame wall 17b of the frame portion 17 and the flange portion 21.

Referring to Fig. 7, the side portion 53 of the flap 25 and the rear frame wall 17b of the frame portion 17 have a slit-like gap C₁ therebetween. Moreover, opposite ends of the flap 25 in the width direction of the vehicle and the left and right frame walls of the frame portion 17 respectively have slit-like gaps C₂ therebetween. The gaps C₁, C₂ communicate with each other. Referring to Figs. 6 and 7, the tear line 11 extends so as to overlap the gaps C₁, C₂ or extends adjacent to the gaps C₁, C₂.

A top face of the flange portion 21 and a top face of the flap 25 are integrally provided with a plurality of welding ribs 31, which extend lengthwise and crosswise so as to form a lattice-like pattern. The welding ribs 31 are arranged at a predetermined pitch in a vibrating direction of vibration welding and are also arranged at a predetermined pitch in a direction perpendicular to the vibrating direction. Generally, the welding ribs 31 extending in the vibrating direction are arranged at a pitch that is narrower than the pitch of the welding ribs 31 extending in the direction perpendicular to the vibrating direction. As shown in Fig. 5, in this airbag-device cover, the vibrating direction of vibration welding is indicated by an arrow F (left-right direction).

Referring to Fig. 6, in JP-A-2005-153545, the welding ribs 31 are provided with communication channels 31a through which latticed internal spaces S partitioned by the welding ribs 31 communicate with each other. Furthermore, through holes 61 extend through the flange portion 21 and the flap 25 in the vertical direction so that the latticed internal spaces S and the spaces under the flange portion 21 and the flap 25 communicate with each other.

In order to attach the flange portion 21 and the flap 25 to the instrument panel body 7 by vibration welding, the flange portion 21 and the flap 25 are respectively placed over the peripheral area of the door portion 13 and the back face of the door portion 13 of the instrument panel body 7, and the welding ribs 31 are then pressed against the back face of the instrument panel body 7 (i.e. the base plate 3). Subsequently, the flange portion 21, the flap 25, and the instrument panel body 7 are relatively vibrated in the direction of the arrow F shown in Fig. 5. Thus, the contact surface between the welding ribs 31 and the base plate 3 melts as a result of friction, whereby the two become integrated with each other.

Although not shown in the drawings, the retainer that accommodates the airbag is placed facing the back face of the door portion 13 of the instrument panel 1 so that the airbag device is installed in the vehicle. In this case, the retainer is placed inside the frame portion 17 of the frame 15, and is joined to the frame portion 17 with, for example, a hook (not shown). When the airbag is inflated, the door portion 13 becomes torn along the tear line 11 due to the expansion pressure of the airbag. As a result, the door portion 13 becomes deployed outward towards the inside of the vehicle cabin together with the flap 25.

Referring to Figs. 6 and 7, in the case where the flange portion 21 of the frame 15 and the flap 25 are to be attached to the instrument panel body 7 with the welding ribs 31 by vibration welding, the tear line 11 and a welding rib 31A that is disposed on the flange portion 21 and closest to the tear line 11 are given a space therebetween having a predetermined dimension or more, and moreover, the tear line 11 and a welding rib 31B that is disposed on the flap 25 and closest to the tear line 11 are given a space therebetween having a predetermined dimension or more. These spaces are provided for preventing the melting material of the welding ribs 31 from entering the tear line 11 (groove 9).

Due to these spaces, there is a possibility that the flange portion 21 and the flap 25 are not securely attached to areas of the instrument panel body 7 that are adjacent to the tear line 11. If the flange portion 21 and the flap 25 are not securely attached to these areas adjacent to the tear line 11, it is highly possible that areas other than the tear line 11 may be torn when the door portion 13 is deployed, causing the torn pieces to scatter.

Accordingly, it is an object of the present invention to provide an airbag-device cover which has a door portion that is torn from an interior panel along a tear line in response to inflation of an airbag so as to be deployed outward towards the inside of a vehicle cabin, and which also has a reinforcement frame and a backing member respectively attached to a peripheral area and a back face of the door portion by vibration welding, such that the frame and the backing member extend to areas of the interior panel that are adjacent to the tear line. Furthermore, it is another object of the present invention to provide an airbag device equipped with such an airbag-device cover.

An airbag-device cover according to the present invention (Claim 1) includes an interior panel defining a part of an interior surface of a vehicle-cabin; a door portion which is provided in the interior panel and is torn from the interior panel in response to inflation of an airbag so as to be opened outward towards the inside of the vehicle cabin; a tear line which surrounds the door portion so as to serve as a guide along which the door portion is torn; and a frame which is attached to an area of the interior panel that surrounds the door portion. One of attachment surfaces between the interior panel and the frame is provided with welding ribs such that the interior panel and the frame are attached to each other with the welding ribs by vibration welding. The welding ribs include a trunk rib extending along the tear line and a branch rib extending from the trunk rib towards the tear line.

An airbag-device cover according to Claim 2 includes an interior panel defining a part of an interior surface of a vehicle cabin; a door portion which is provided in the interior panel and is torn from the interior panel in response to inflation of an airbag so as to be opened outward towards the inside of the vehicle cabin; a tear line which surrounds the door portion so as to serve as a guide along which the door portion is torn; a frame which is attached to an area of the interior panel that surrounds the door portion; and a backing member attached to a back face of the door portion of the interior panel. One of attachment surfaces between the interior panel and the frame and one of attachment surfaces between the interior panel and the backing member are provided with welding ribs. The interior panel and the frame are attached to each other with the corresponding welding ribs by vibration welding, and the interior panel and the backing member are attached to each other with the corresponding welding ribs by vibration welding. The welding ribs include a trunk rib extending along the tear line, and a branch rib extending from the trunk rib towards the tear line.

According to the airbag-device cover set forth in Claim 3, in one of Claims 1 and 2, the branch rib is preferably narrower in width than the trunk rib.

According to the airbag-device cover set forth in Claim 4, in any one of Claims 1 to 3, the trunk rib preferably extends along the tear line in a vibrating direction of vibration welding, and the branch rib preferably extends crosswise to the vibrating direction.

An airbag device according to the present invention (Claim 5) includes the airbag-device cover according to any one of Claims 1 to 4; a retainer disposed facing a back face of the interior panel; an airbag housed in the retainer; and an inflator for inflating the airbag.

In the airbag-device cover and the airbag device according to the present invention (Claims 1 to 5), the branch rib of the welding ribs, that joins the interior panel to the frame and the backing member, extends toward the tear line from the trunk rib extending along the tear line. Thus, the frame and the backing member are securely welded to areas of the interior panel that are adjacent to the tear line with the branch rib. Accordingly, when the door portion is being deployed in response to a pressure from the airbag, areas other than the tear line 11 are prevented or inhibited from being torn.

Furthermore, as set forth in Claim 3, since the branch rib may be narrower in width than the trunk rib, the amount of melting material of the branch rib during a vibration welding process is small. Thus, the melting material of the branch rib is substantially or entirely prevented from entering the tear line.

Furthermore, as set forth in Claim 4, the trunk rib may extend along the tear line in the vibrating direction of vibration welding, and the branch rib may extend from the trunk ribs in the direction crosswise to the vibrating direction. This further prevents or inhibits the melting material of the branch rib from entering the tear line.

### [Best Mode for Carrying Out the Invention]

Embodiments of the present invention will now be described with reference to the drawings.

Fig. 1 is a top view of a frame and a backing member according to an embodiment of the present invention;
Fig. 2 is an enlarged view of section II in Fig. 1;
Fig. 3 is a cross-sectional view taken along line III-III in Fig. 2;
Fig. 4 is an enlarged perspective view of welding ribs;
Fig. 5 is a top view of a frame and a backing member included in an airbag-device cover according to a conventional example;
Fig. 6 is an enlarged view of section VI in Fig. 5; and
Fig. 7 is a cross-sectional view taken along line VII-VII in Fig. 6.

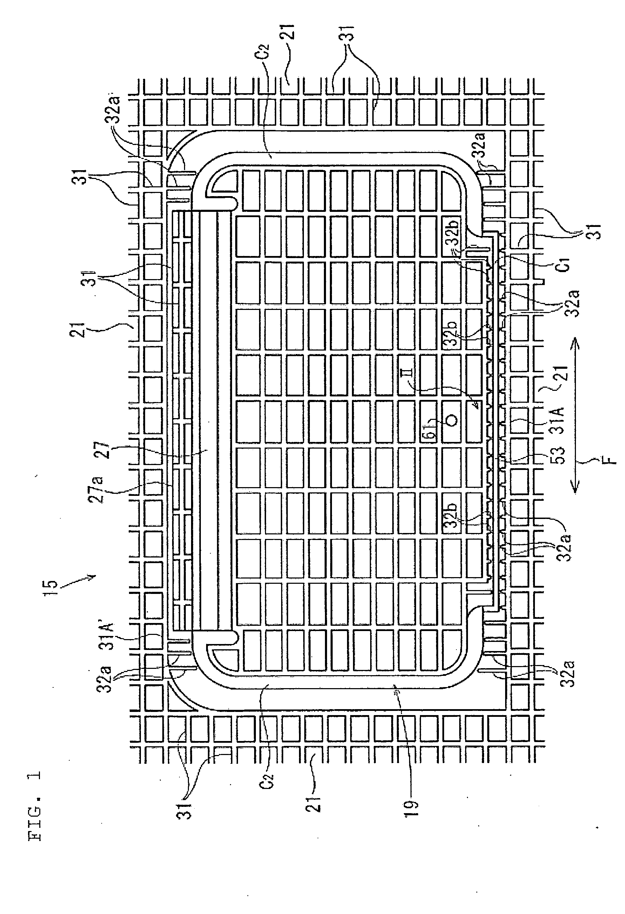

The embodiment of Figs. 1 to 4 is directed to an example in which the present invention is applied to the airbag-device cover shown in Figs. 5 to 7.

In this embodiment, the welding ribs 31 forms a lattice-like pattern on the top face of the flange portion 21 and the top face of the flap 25. A welding rib 31A (on the flange portion 21) and a welding rib 31B (on the flap 25), which serve as trunk ribs are disposed closest to the tear line 11 and extend in the vibrating direction of vibration welding. The welding rib 31A and the welding rib 31B respectively have a plurality of branch ribs 32a and a plurality of branch ribs 32b protruding therefrom towards the tear line 11. The branch ribs 32a, 32b extend in a direction substantially perpendicular to the vibrating direction.

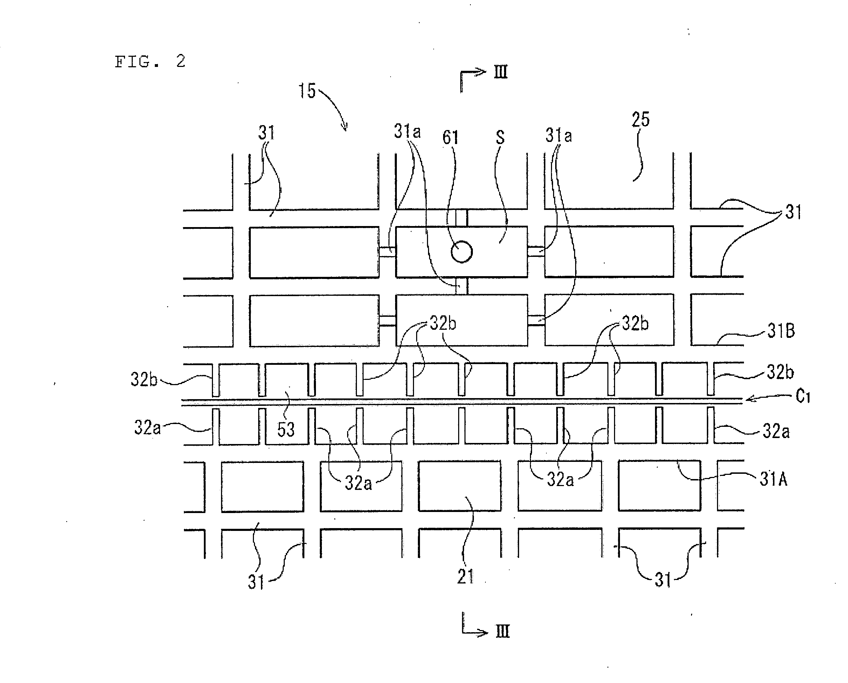

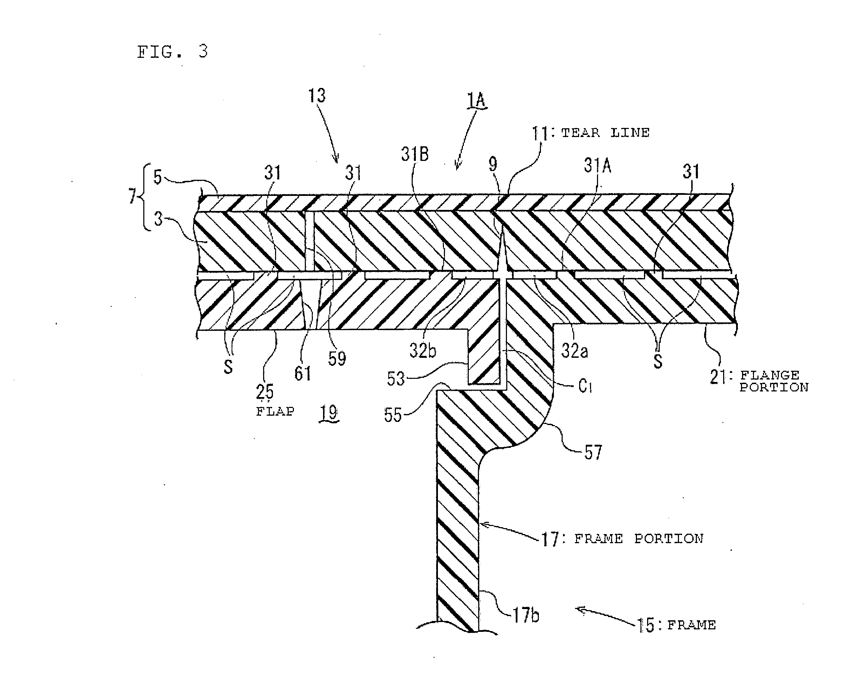

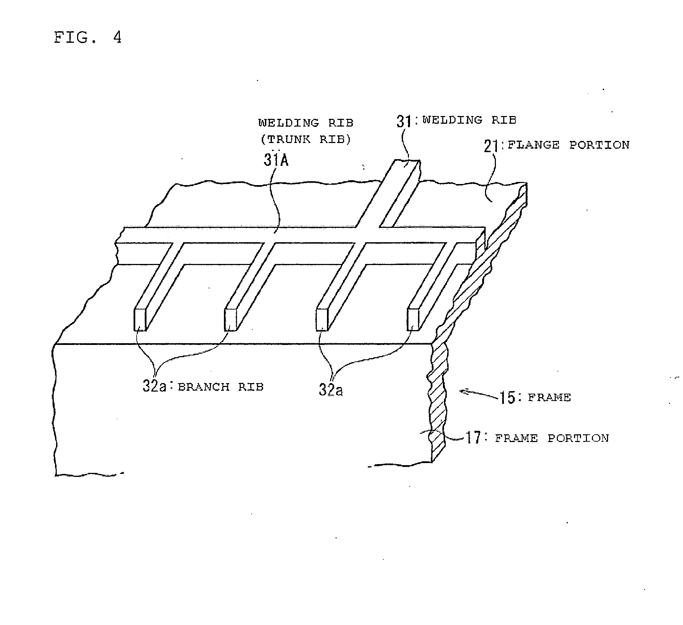

Referring to Figs. 2 and 4, the branch ribs 32a, 32b are narrower in width than the welding ribs 31A, 31B, and moreover, the distance between adjacent branch ribs 32a, 32a and between adjacent branch ribs 32b, 32b is smaller than the distance between adjacent welding ribs 31, 31 that extend perpendicular to the vibrating direction. As shown in Fig. 4, the height of the branch ribs 32a, 32b protruding respectively from the top face of the flange portion 21 and the top face of the flap 25 is equal to the height of the welding ribs 31A, 31B. As shown in Fig. 3, the tips of the branch ribs 32a, 32b are extremely close to the edges of the tear line 11 (groove 9).

Referring to Fig. 1, in this embodiment, a welding rib 31A' disposed closest to the tear line 11 at a side of the flange portion 21 closer to the hinge 27 also has a plurality of branch ribs 32a protruding therefrom towards the tear line 11. The branch ribs 32a are arranged at a predetermined pitch.

The width of each of the branch ribs 32a, 32b is within a range of 1.0 to 5.0 mm, and is preferably within a range of about 1.0 to 2.5 mm. Moreover, the number of the branch ribs 32a, 32b is within a range of 5 to 25 per a 100-mm-length of the corresponding welding ribs (trunk ribs) 31A, 31B, and is preferably within a range of about 10 to 18. The length of each of the branch ribs 32a, 32b in the direction perpendicular to the vibrating direction is within a range of 1.0 to 5.0 mm from the corresponding edge of the tear line 11 (groove 9), and preferably within a range of about 1.5 to 3.0 mm.

Other configurations of the airbag-device cover in this embodiment are the same as those of the airbag-device cover shown in Figs. 5 to 7. Therefore, components shown in Figs. 1 to 4 that are equivalent to those shown in Figs. 5 to 7 are given the same reference numerals, and descriptions of those components will not be repeated.

In this embodiment, the flange portion 21 and the flap 25 are respectively placed over the peripheral area of the door portion (tear line 11) and the back face of the door portion 13 of the instrument panel body 7, and the welding ribs 31 (including 31A, 31A', and 31B) and the branch ribs 32a, 32b are then pressed against the back face of the instrument panel body 7 (i.e. the base plate 3). Subsequently, the frame 15, the flap 25, and the instrument panel body 7 are relatively vibrated in the direction of an arrow F shown in Fig. 1. Thus, the contact surface between the welding ribs 31 and the base plate 3 and between the branch ribs 32a, 32b and the base plate 3 melts as a result of friction, whereby the welding ribs 31 and the base plate 3 become integrated with each other and the branch ribs 32a, 32b and the base plate 3 become integrated with each other.

Although not shown in the drawings, a retainer that accommodates an airbag is placed facing the back face of the door portion 13 of an instrument panel 1A so that an airbag device is installed in a vehicle. In this case, the retainer is placed inside the frame portion 17 of the frame 15, and is joined to the frame portion 17 with, for example, a hook (not shown). When the airbag is inflated, the door portion 13 becomes torn along the tear line 11 due to the expansion pressure of the airbag. As a result, the door portion 13 becomes open outward towards the inside of the vehicle cabin together with the flap 25.

In the instrument panel 1A, the branch ribs 32a, 32b extending towards the tear line 11 from the welding ribs (trunk ribs) 31A, 31B surrounding the tear line 11 are welded to areas of the instrument panel body 7 that are adjacent to the tear line 11. Thus, the flange portion 21 of the frame 15 and the flap 25 are securely attached to these areas of the instrument panel body 7 that are adjacent to the tear line 11. Accordingly, when the door portion 13 is being deployed in response to a pressure from the airbag, areas other than the tear line 11 are prevented or inhibited from being torn.

Furthermore, according to this embodiment, since the branch ribs 32a, 32b extend crosswise to the vibrating direction from the welding ribs 31A, 31B that extend in the vibrating direction of vibration welding, the melting material of the branch ribs 32a, 32b is substantially or entirely prevented from entering the tear line 11 during the vibration welding process.

The above-described embodiment is only an example of the present invention, and therefore, the present invention is not limited to the above embodiment.

For example, although the welding ribs are provided on the top face of the flange portion 21 and the top face of the flap 25 in the above embodiment, the welding ribs may alternatively be provided on the back face of the instrument panel body 7.

Furthermore, although the above embodiment is directed to an example in which the present invention is applied to a type of an airbag-device cover that has the tear line 11 provided only around the periphery of the door portion 13, the present invention is also applicable to a type of an airbag-device cover in which a tear line extends laterally across the door portion 13, such that the door portion is deployable by being separated into a plurality of segments along the tear line. Furthermore, the present invention is also applicable to a type of an airbag-device cover in which the door portion (or a part of the door portion) is deployable by being lifted upward.

## Claims

1. An airbag-device cover comprising:
an interior panel defining a part of an interior surface of a vehicle cabin;
a door portion which is provided in the interior panel and is torn from the interior panel in response to inflation of an airbag so as to be opened outward towards the inside of the vehicle cabin;
a tear line which surrounds the door portion so as to serve as a guide along which the door portion is torn; and
a frame which is attached to an area of the interior panel that surrounds the door portion,
wherein one of attachment surfaces between the interior panel and the frame is provided with welding ribs such that the interior panel and the frame are attached to each other with the welding ribs by vibration welding, and
wherein the welding ribs include a trunk rib extending along the tear line and a branch rib extending from the trunk rib towards the tear line.

2. An airbag-device cover comprising:
an interior panel defining a part of an interior surface of a vehicle cabin;
a door portion which is provided in the interior panel and is torn from the interior panel in response to inflation of an airbag so as to be opened outward towards the inside of the vehicle cabin;
a tear line which surrounds the door portion so as to serve as a guide along which the door portion is torn;
a frame which is attached to an area of the interior panel that surrounds the door portion; and
a backing member attached to a back face of the door portion of the interior panel,
wherein one of attachment surfaces between the interior panel and the frame and one of attachment surfaces between the interior panel and the backing member are provided with welding ribs, the interior panel and the frame being attached to each other with the corresponding welding ribs by vibration welding, the interior panel and the backing member being attached to each other with the corresponding welding ribs by vibration welding, and
wherein the welding ribs include a trunk rib extending along the tear line, and a branch rib extending from the trunk rib towards the tear line.

3. The airbag-device cover according to one of Claims 1 and 2, wherein the branch rib is narrower in width than the trunk rib.

4. The airbag-device cover according to any one of Claims 1 to 3, wherein the trunk rib extends along the tear line in a vibrating direction of vibration welding, and wherein the branch rib extends crosswise to the vibrating direction.

5. An airbag device comprising:
the airbag-device cover according to any one of Claims 1 to 4;
a retainer disposed facing a back face of the airbag-device cover;
an airbag housed in the retainer; and
an inflator for inflating the airbag.
